# FASCICULE DE BREVET EUROPEEN

(11) **EP 1 144 700 B1**
(45) Date de publication et mention de la délivrance du brevet: **12.02.2003**
(21) Numéro de dépôt: 99959493.0
(22) Date de dépôt: 17.12.1999
(51) Int. Cl.: C22B 21/06, C04B 38/00, C22B 9/02

(54) **PROCEDE AMELIORE DE FILTRATION DE METAL LIQUIDE SUR UN LIT DE MATERIAU PARTICULAIRE REFRACTAIRE**
VERFAHREN ZUM FILTRIEREN VON GESCHMOLZENEM METALL UNTER VERWENDUNG EINES FEUERFESTEN PARTIKELFÖRMIGEN WERKSTOFFES FÜR DAS FILTERBETT
IMPROVED METHOD FOR FILTERING A METAL LIQUID ON A BED OF REFRACTORY PARTICULATE MATERIAL

(30) Priorité: 21.12.1998 FR 9816389
(43) Date de publication de la demande: 17.10.2001
(73) Titulaire: ALUMINIUM PECHINEY, 75218 Paris Cedex 16 (FR); Pechiney Rhenalu, 75116 Paris (FR)
(72) Inventeur: LESCUYER, Hervé, F-73300 Hermillon (FR); DUBUS, Alain, F-68600 Biesheim (FR)
(74) Mandataire: Marsolais, Richard
(86) Numéro de dépôt international: FR9903184
(87) Numéro de publication internationale: WO00037692

(56) Documents cités:
- EP-A- 0 076 781
- GB-A- 1 367 069
- US-A- 4 278 544
- US-A- 4 528 099
- US-A- 5 322 821

## Description

### Domaine technique

L'invention concerne un procédé amélioré de filtration de métal liquide, en particulier l'aluminium, le magnésium ou leurs alliages sur un lit épais de gravier réfractaire.

### Etat de la technique

Il est connu de filtrer l'aluminium liquide sur un lit de gravier épais en alumine frittée, dite tabulaire qui est une alumine alpha, se présentant généralement sous forme de billes ou de grains concassés, pour en éliminer les inclusions solides ou liquides. Il est très important de pouvoir améliorer cette élimination en particulier quand l'aluminium sert à obtenir des feuilles très minces afin de diminuer le risque de rebuts ; en effet plus la feuille produite est mince plus il devient nécessaire d'éliminer les inclusions de petite taille, en plus de grosses, car elles produisent des défauts qui deviennent préjudiciables.

Le lit de gravier d'alumine frittée a généralement une épaisseur de l'ordre de 40 cm. Le taux d'épuration du métal liquide après filtration des inclusions par ce type d'alumine est limité ; ainsi le dit métal peut encore contenir après filtration jusqu'à 10000 particules de taille supérieure à 20 µm par kg, même pour un temps de séjour qui est généralement compris entre 100 et 500 sec, le dit taux d'épuration étant très variable en fonction de la taille des particules et d'une coulée à l'autre. De plus il convient de noter que ce type d'alumine est coûteux.

EP-A- 0 076 781 divulgue un filtre pour aluminium liquide ayant une porosité de 5 - 45 vol.%, constitué de billes de corindon liées ou frittées.

La demanderesse a ainsi cherché à diminuer le taux d'inclusions présent dans le métal liquide filtré en s'intéressant plus particulièrement à améliorer l'élimination des inclusions de petite taille. Elle a également cherché à diminuer le coût, et plus généralement améliorer les performances du procédé de filtration de métal liquide à travers un lit de matériau particulaire, tout en essayant de trouver une solution au problème du recyclage du dit lit de matériau particulaire.

### Description de l'invention

L'invention est un procédé de filtration de métal liquide dans lequel le dit métal liquide passe à travers un lit épais de matériau particulaire réfractaire dont la porosité ouverte des particules est comprise entre 5 et 30 %.

Ce procédé s'applique essentiellement à l'aluminium, au magnésium ou leurs alliages.

La porosité, qui correspond au volume poreux des grains du lit (porosités de surface et porosités internes), est mesurée par porosimétrie au mercure ; elle est due à des pores de diamètre essentiellement supérieur à 10 µm et généralement inférieur à 200 µm pour conserver une bonne tenue à l'érosion. La granulométrie est de préférence comprise entre 0,2 et 20 mm et le lit a une épaisseur de 4 à 40 cm. Le temps de séjour du métal liquide dans le lit de gravier peut être du même ordre de grandeur que celui utilisé pour le gravier d'alumine tabulaire mais il est remarquable de noter qu'on obtient une épuration au moins équivalente, voire supérieure, à celle obtenue avec la dite alumine pour des temps de séjour inférieur à 200 sec, voire inférieure à 50 sec. Des temps de séjour aussi courts permettent de diminuer la taille des installations industrielles de manière significative tout en conservant une même efficacité de filtration.

En comparaison un gravier d'alumine tabulaire présente une très faible porosité inférieure en général à 3 % due à des pores très fins en majorité inférieurs à 10 µm.

Le matériau utilisé dans l'invention est avantageusement une alumine. Selon le mode de réalisation préféré de l'invention, ledit matériau réfractaire est un corindon électrofondu obtenu par fusion d'une alumine au four à arc, suivie par une coulée, de préférence dans des moules, en réglant le régime de refroidissement et solidification de façon à obtenir la porosité ouverte voulue, et par un concassage et/ou broyage, par exemple dans un broyeur à cylindres ou à marteaux, le gravier obtenu étant ensuite criblé à la taille souhaitée et dépoussiéré. Des modificateurs de cristallisation, tels que F, B, Y, MgO ou SiO_{2,} peuvent être ajoutés pour contrôler la porosité. Il est préférable d'utiliser du corindon blanc pour éviter tout risque de souiller chimiquement le métal liquide.

Le taux d'élimination des inclusions est toujours supérieur à 95 %, voire supérieure à 97 %, quelle que soit la taille des dites inclusions, ce qui se traduit également par une nette baisse de présence de particules de petites dimensions.

Il importe de noter que, même s'il est toujours possible d'utiliser un long temps de séjour pour améliorer le taux d'élimination des inclusions, l'invention permet d'employer des temps de séjour réduits tout en maintenant un niveau de qualité au moins égal, voire supérieur, à celui observé avec d'autres matériaux particulaires et une remarquable constance d'une coulée à l'autre, ce qui n'est pas le cas par exemple avec de l'alumine tabulaire. La possibilité de filtrer avec des temps de séjour réduits se traduit également, à une épaisseur de graviers donnée, par la possibilité d'augmenter le débit métal (ou la vitesse de filtration) à efficacité égale. Cette possibilité pourrait également limiter le relargage d'inclusions lors d'à-coups du débit de métal.

Ainsi le temps de séjour peut être aussi réduit que 1 sec, de préférence au moins égal à 2 sec, et de préférence encore au moins égal à 5 sec ; il est généralement inférieur à 500 sec, de préférence inférieur à 200 sec, et de préférence encore inférieur à 100 sec et se situe avantageusement entre 2 et 200 sec ou mieux entre 2 et 100 sec, voire entre 5 et 100 sec, les temps de séjour les plus courts étant déterminés par le niveau du taux d'élimination souhaité et par le risque de relargage des inclusions accepté.

A titre d'illustration le nombre de particules présentes dans le métal filtré ne dépasse pas généralement 600 particules de taille supérieure à 20 µm par kg de métal liquide filtré, la quantité de particules plus petites étant réduite d'autant. Il apparaît que non seulement la fixation des inclusions se fait mieux mais encore qu'il ne se produit pas de relargage.

Il semble que la présence de la porosité minimum requise joue un rôle prépondérant pour améliorer l'efficacité de la filtration, le taux de rétention des inclusions, la vitesse de filtration, ou pour diminuer la taille des inclusions retenues et éviter leur relargage. De même la capacité de rétention des inclusions dans le corindon est plus importante que dans l'alumine tabulaire, c'est-à-dire qu'à taux d'épuration constant du métal liquide la durée de vie des filtres est augmentée. La fréquence des interventions en vue de changer le lit filtrant est alors réduite, ce qui permet également de limiter les arrêts de production.

On peut aussi penser que d'autres paramètres peuvent jouer un rôle important comme la rugosité ou la chimie de surface qui pourraient augmenter la mouillabilité par le métal liquide ou la capacité de rétention (ou adhésion) des inclusions sur le gravier. Les phénomènes mis en jeu pourraient être différents de ceux se produisant avec l'alumine tabulaire de porosité très faible. Il pourrait en particulier se produire une filtration en partie intra granulaire alors que pour une alumine tabulaire les pores de diamètre inférieur à 10 µm ne sont pas accessibles à l'aluminium liquide dans les conditions normales d'exploitation.

Le fait de pouvoir utiliser des vitesses de filtration élevées tout en améliorant le taux d'épuration et le taux de rétention permet d'améliorer la productivité, de diminuer l'encombrement des installations de filtration, de diminuer la consommation de médium filtrant et ainsi d'obtenir une diminution des coûts d'autant plus importante que le corindon est lui même moins cher que l'alumine tabulaire.

De plus le corindon offre l'avantage de pouvoir être aisément recyclé en le re-manufacturant par simple fusion alors que pour l'alumine tabulaire, si l'on veut éviter une re-manufacturation coûteuse, il faut effectuer un traitement de régénération complexe puisqu'il comprend généralement la combinaison d'un traitement à l'aide de différentes solutions aqueuses, qui sont autant d'effluents à traiter et/ou recycler, et un traitement thermique de régénération.

Ledit lit peut éventuellement être consolidé afin de faciliter sa manipulation.

L'exemple suivant illustre l'invention en la comparant à l'état de la technique.

Deux lits filtrants ont été successivement utilisés dans la même installation pour effectuer plusieurs coulées chacun.

Le premier lit, selon l'art antérieur, est à base de billes d'alumine tabulaire de granulométrie 3/6 mesh, c'est-à-dire comprise entre 3,35 mm et 6,70 mm, et de porosité 2,8 % due en grande partie à des pores de diamètre inférieur à 7 µm ; il a une épaisseur de 40 cm. La mesure de la surface spécifique, selon la méthode de mesure de l'adsorption multi-moléculaire connue sous le nom BET (Brunauer, Emmet et Teller), a donné une valeur de 0,012 m²/g pour ce lit.

Le second lit, selon l'invention, est un corindon blanc (pureté supérieure à 99,6 %) de porosité 10,7 % due en majeur partie à des pores de diamètre compris entre 10 et 250 µm, sa granulométrie est comprise entre 3 et 6 mm et le lit a une épaisseur de 40 cm. Il est obtenu en coulant l'alumine liquide dans des lingotières métalliques, la vitesse de refroidissement et solidification étant de 50 à 100 °C/h, en concassant le produit solidifié puis le broyant dans un broyeur à cylindres et en le criblant entre des tamis d'ouverture 3 et 6 mm. La surface spécifique BET de ce lit était de 0,09 m²/g. Les particules du lit étaient plutôt de forme aciculaire, voire aiguillée dans certains essais.

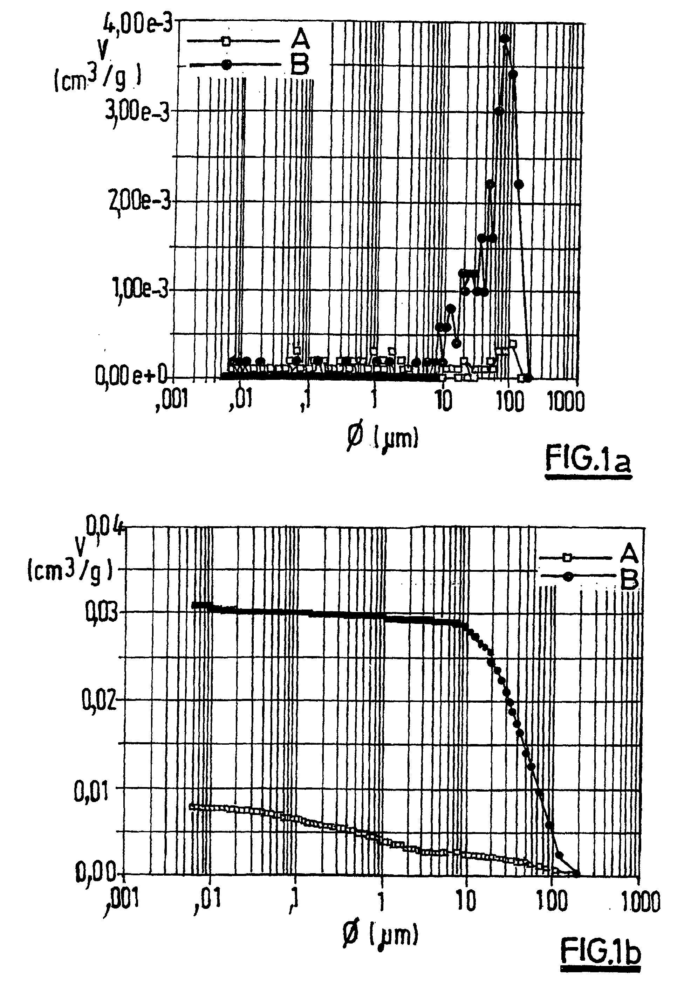

La distribution de porosités des particules du lit selon l'art antérieur (courbe A) et selon l'invention (courbe B) est représentée à la figure 1. La figure la donne le volume poreux

V (en cm3/g) en fonction du diamètre Ø des pores (en µm). La figure 1b donne les mêmes distributions poreuses que la figure la sous forme cumulée (distributions poreuses cumulées).

Le métal liquide utilisé est un alliage d'aluminium ― magnésium (1,2 %) dans lequel on fait des ajouts connus d'inclusions de taille inférieure à 120 µm de façon à avoir entre 10000 et 35000 inclusions/kg de métal selon les coulées. Le temps de séjour de l'aluminium liquide dans le lit filtrant est de 100 sec lors de chacune des coulées.

Le comptage des inclusions est effectué à l'aide d'un appareil LiMCA (Liquid Metal Cleanliness Analysis) commercialisé par la société BOMEM et mettant en oeuvre dans l'aluminium liquide la méthode de comptage bien connue du type dit Counter Coulter qui mesure à la fois le nombre et la dimension des particules par une mesure de résistance électrique quand celles-ci passent par un orifice calibré.

Les tableaux ci-dessous donnent pour chaque coulée le taux d'élimination des inclusions, en %, observé pendant les coulées en fonction de la taille des inclusions. Le tableau 1 correspond aux essais selon l'art antérieur, le tableau 2 correspond aux essais selon l'invention.

**Tableau 1 :**

| Taux d'élimination des inclusions après filtration sur lit d'alumine tabulaire (essais comparatifs) | | | | |
|---|---|---|---|---|
| Taille des inclusions µm | 20 - 40 | 40 - 60 | 60 - 80 | > 80 |
| Coulée 1 | 77 | 73 | 77 | 87 |
| Coulée 2 | 95 | 93 | 91 | 94 |
| Coulée 5 | 88 | 90 | 87 | 92 |
| Coulée 6 | 84 | 90 | 92 | 98 |
| Moyenne | 86 | 87 | 87 | 93 |

On voit que dans ces essais la dispersion des résultats est importante à la fois d'une coulée à l'autre et en fonction de la granulométrie, et qu'en moyenne le taux d'élimination est insuffisant puisqu'il ne dépasse pas 93 % pour les plus grosses inclusions. Le caractère aléatoire du taux d'élimination des inclusions est particulièrement néfaste car il augmente considérablement le risque de rebuts lors de l'obtention ultérieure des tôles minces ou très minces.

On observe que le résultat de filtration est excellent à la fois en homogénéité et en niveau puisque le taux d'élimination est d'au moins 98 % en moyenne. En particulier les particules les plus petites sont très bien éliminées.

**Tableau 2 :**

| Taux d'élimination des inclusions après filtration sur un lit de corindon selon l'invention | | | | |
|---|---|---|---|---|
| Taille des inclusions µm | 20 - 40 | 40 - 60 | 60 - 80 | 80-100 |
| Coulée 1 | 98 | 99 | 98 | 97 |
| Coulée 2 | 99 | 99 | 100 | 99 |
| Coulée 3 | 98 | 98 | 96 | 99 |
| Coulée 4 | 99 | 99 | 99 | 98 |
| Coulée 5 | 99 | 99 | 98 | 97 |
| Moyenne | 99 | 99 | 98 | 98 |

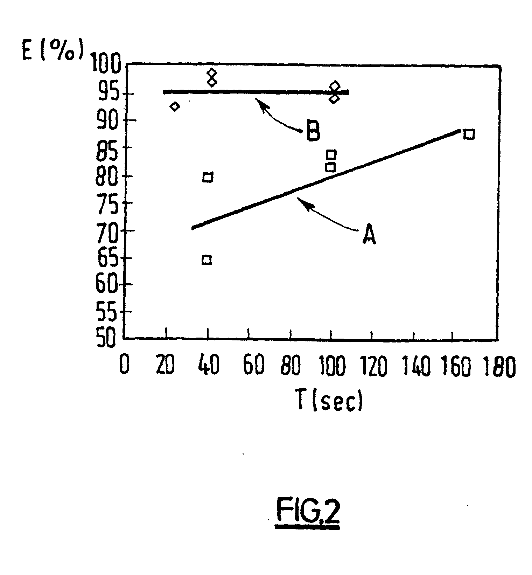

La figure 2, qui donne l'efficacité de filtration E (en %) en fonction du temps de séjour T (en secondes) pour un filtre selon l'art antérieur (courbe A) et selon l'invention (courbe B), montre que les lits filtrants selon l'invention préservent une efficacité de filtrage très élevée pour des temps de séjour inférieurs à 200 sec, alors que l'efficacité des lits filtrants de l'art antérieur diminue sensiblement pour des temps de séjour inférieurs à 200 sec. Le temps de séjour correspond à la vitesse de filtration équivalente fût-vide, c'est-à-dire qu'il correspond au temps de séjour minimal calculé à partir du débit métal comme s'il s'agissait d'un flux laminaire. Malgré une surface spécifique voisine, voire plus faible, que celle du lit de l'art antérieur, le lit selon l'invention a montré une plus grande efficacité de filtration.

## Revendications

1. Procédé de filtration de métal liquide par passage du dit métal liquide sur un lit de matériau particulaire réfractaire **caractérisé en ce que** les particules du matériau ont une porosité ouverte comprise entre 5 et 30 %.

2. Procédé de filtration selon la revendication 1 **caractérisé en ce que** le temps de séjour du métal liquide dans le lit de matériau particulaire est supérieur à 1 sec et inférieur à 500 sec.

3. Procédé de filtration selon l'une quelconque des revendications 1 ou 2 **caractérisé en ce que** la porosité provient essentiellement de pores de diamètre supérieur à 10 µm et de préférence compris entre 10 et 200 µm.

4. Procédé de filtration selon l'une quelconque des revendications 1 à 3 **caractérisé en ce que** le matériau a une granulométrie comprise entre 0,2 et 20 mm et que le lit a une épaisseur comprise entre 4 et 40 cm.

5. Procédé de filtration selon l'une quelconque des revendications 1 à 4 **caractérisé en ce que** le matériau est du corindon électrofondu.

6. Procédé de filtration selon l'une quelconque des revendications 1 à 5 **caractérisé en ce que** le métal liquide est choisi parmi l'aluminium, magnésium ou leurs alliages.

7. Procédé d'obtention du corindon de la revendication 5 **caractérisé en ce qu'**il comprend une électrofusion d'alumine, une coulée, un refroidissement et une solidification pour obtenir la dite porosité, un concassage puis un criblage.

8. Corindon particulaire utilisable dans le procédé de l'une quelconque des revendications 1 à 6 ou obtenu selon le procédé de la revendication 7 **caractérisé en ce que** les particules de corindon ont une porosité ouverte comprise entre 5 et 30 %.

9. Dispositif de filtration de métal liquide comportant le matériau de la revendication 8.

10. Utilisation d'un dispositif de filtration de métal liquide comportant le matériau de la revendication 8 dans le procédé de l'une quelconque des revendications 1 à 6.

## Claims

1. Process of filtration of liquid metal by passage of the said liquid metal through a bed of particulate refractory material, **characterised in that** the particles of the material have an open porosity comprised between 5 and 30%.

2. Process of filtration according to claim 1, **characterised in that** the residence time of the liquid metal in the bed of particulate material is greater than 1 sec and less than 500 sec.

3. Process of filtration according to any one of claims 1 or 2, **characterised in that** the porosity arises essentially from pores of diameter greater than 10 µm and preferably comprised between 10 and 200 µm.

4. Process of filtration according to any one of claims 1 to 3, **characterised in that** the material has a particle size comprised between 0.2 and 20 mm and **in that** the bed has a thickness comprised between 4 and 40 cm.

5. Process of filtration according to any one of claims 1 to 4, **characterised in that** the material is electrofused corundum.

6. Process of filtration according to any one of claims 1 to 5, **characterised in that** the liquid metal is selected from among aluminium, magnesium, or their alloys.

7. Process of obtaining the corundum of claim 5, **characterised in that** it comprises electromelting of alumina, casting, cooling, and solidification to obtain the said porosity, crushing and then sieving.

8. Particulate corundum, utilisable in the process of any one of claims 1 to 6 or obtained according to the process of claim 7, **characterised in that** the particles of corundum have an open porosity comprised between 5 and 30%.

9. Device for the filtration of liquid metal comprising the material of claim 8.

10. Utilisation of a device for the filtration of liquid metal comprising the material of claim 8 in the process of any one of claims 1 to 6.

## Patentansprüche

1. Verfahren zum Filtrieren von Flüssigmetall durch Führen des Flüssigmetalls über ein Filterbett aus feuerfestem partikelförmigen Werkstoff, **dadurch gekennzeichnet, dass** die Partikel des Werkstoffs eine offene Porosität von 5 bis 30 % haben.

2. Filtrierverfahren nach Anspruch 1, **dadurch gekennzeichnet, dass** die Verweilzeit des Flüssigmetalls in dem Filterbett aus partikelförmigem Werkstoff mehr als 1 sec und weniger als 500 sec beträgt.

3. Filtrierverfahren nach einem der Ansprüche 1 oder 2, **dadurch gekennzeichnet, dass** die Porosität im wesentlichen durch Poren von mehr als 10 µm und vorzugsweise 10 bis 200 µm Durchmesser entsteht.

4. Filtrierverfahren nach einem der Ansprüche 1 bis 3, **dadurch gekennzeichnet, dass** der Werkstoff eine Korngröße von 0,2 bis 20 mm hat und dass das Filterbett eine Dicke von 4 bis 40 cm hat.

5. Filtrierverfahren nach einem der Ansprüche 1 bis 4, **dadurch gekennzeichnet, dass** der Werkstoff elektrisch geschmolzener Korund ist.

6. Filtrierverfahren nach einem der Ansprüche 1 bis 5, **dadurch gekennzeichnet, dass** das Flüssigmetall aus Aluminium, Magnesium oder ihren Legierungen gewählt wird.

7. Verfahren zur Herstellung des Korunds aus Anspruch 5, **dadurch gekennzeichnet, dass** es ein elektrisches Schmelzen von Aluminiumoxid, einen Abguss, eine Abkühlung und eine Erstarrung zur Erzeugung der Porosität, eine Zerkleinerung und dann eine Siebung umfasst.

8. Partikelförmiger Korund, verwendbar im Verfahren nach einem der Ansprüche 1 bis 6 oder hergestellt gemäß dem Verfahren nach Anspruch 7, **dadurch gekennzeichnet, dass** die Korundpartikel eine offene Porosität von 5 bis 30 % haben.

9. Vorrichtung zum Filtrieren von Flüssigmetall mit dem Werkstoff aus Anspruch 8.

10. Verwendung einer Vorrichtung zum Filtrieren von Flüssigmetall mit dem Werkstoff aus Anspruch 8 in dem Verfahren nach einem der Ansprüche 1 bis 6.
